# EUROPÄISCHE PATENTSCHRIFT

(11) **EP 2 715 106 B1**
(45) Veröffentlichungstag und Bekanntmachung des Hinweises auf die Patenterteilung: **28.10.2015**
(21) Anmeldenummer: 12719731.7
(22) Anmeldetag: 09.05.2012
(51) Int. Cl.: F03B 1/04, F03B 11/02

(54) **PELTONTURBINE MIT SAUGSTUTZEN**
PELTON TURBINE WITH SUCTION INLETS
TURBINE PELTON À TUBULURE D'ASPIRATION

(30) Priorität: 12.07.2011 DE 202011103108 U
(43) Veröffentlichungstag der Anmeldung: 09.04.2014
(73) Patentinhaber: Erlach & Erlach GmbH, 88213 Ravensburg (DE)
(72) Erfinder: ERLACH, Josef, 88213 Ravensburg (DE); ERLACH, Philipp, 60329 Frankfurt (DE)
(74) Vertreter: Manitz, Finsterwald & Partner GbR
(86) Internationale Anmeldenummer: PCT/EP2012/058579
(87) Internationale Veröffentlichungsnummer: WO 2013/007415

(56) Entgegenhaltungen:
- DE-C- 413 533
- DE-C- 517 728
- FR-A- 601 535
- JP-A- 6 307 322

## Beschreibung

Die vorliegende Erfindung betrifft eine Peltonturbine nach dem Oberbegriff des Hauptanspruches, wobei es sich um eine Weiterentwicklung der Erfindungen "Peltonturbine mit einem Wasserabfuhrsystem" gemäß EP 2 034 176 und "Peltonturbine mit einem Zulaufsystem" gemäß EP 2 035 689 handelt.

Peltonturbinen in horizontaler und vertikaler Ausführung in verschiedenen Düsenkombinationen sind allgemein bekannt. Das Einsatzgebiet ist unter anderem für Wasserturbinen mit entsprechender großer Fallhöhe, insbesondere bei extremen Teillastanforderungen für Sommer und Winterbetrieb, sowie bei Pumpspeicher-Kraftwerken mit der Anforderung der schnellen Regelleistung mit guten Wirkungsgraden über den gesamten Leistungsbereich.

Beispiele derartiger Peltonturbinen sind beschrieben in der deutschen Patentschrift 883 426, der DE 10 2010 024 475 A1, der CH-PS 100 772, der DE-PS 413 533, der FR-PS 601 535, der JP 6 307 322 sowie der DE 517 728.

Die Peltonturbine funktioniert nach dem Prinzip der Gleichdruck-Turbine, das heißt, dass der Freistrahlt nach dem Düsenaustritt sich im atmosphärischen Umgebungsdruck, bzw. im gleichen Druckniveau wie er im Laufradbereich und Gehäuseraum einschließlich bis zum Ablaufkanal herrscht, befindet.

Zuerst wird das Wasser von einem Stau-Becken über eine Rohrleitung zur Turbine bei einer gewissen Fallhöhe bzw. einem Zulaufdruck (p-w), zugeführt. Dabei wird die Energie in der Düse (2) in Geschwindigkeit umgesetzt und verlässt diese als so genannter Freistrahl (4). Der Freistrahl je Düse (2) trifft dann tangential auf das rotierende Laufrad (6) im Strahlkreisdurchmesser (D1) der Doppelbecher (5) auf und wandelt die kinetische Energie des Freistrahles in mechanische Drehenergie um. Beim Auftreffen auf den Doppelbecher (5) wird der Freistrahl von der Mittelschneide des Bechers geteilt und verlässt den Becher nach Abgabe des größten Teiles der kinetischen Energie zu gleichen Teilen beidseitig des Laufrades.

Das nach dem seitlichen Austritt aus dem Doppelbecher (5) so genannte "Austrittswasser" weist noch eine verbleibende Restenergie von 2-4% auf und ist dabei stark aufgefächert. Durch die Auffächerung wird ein großer Luftanteil mitgerissen und trifft sodann großflächig entsprechend der Geschwindigkeit aus der Restenergie auf die Gehäusewände auf und wird weitgehend nach unten in den Ablaufkanal abgeleitet. Vagabundierendes und vernebeltes Spritzwasser entsteht beim Eintauchen des Freistrahles an den Stirnflächen der Becherschneiden sowie beim Verlassen des Restwassers radial nach außen, ist wenig richtungsgebunden, energiearm und füllt, vermischt mit der Rotations-Umluft, meist den Rest des Turbinengehäuses aus. Das Laufrad hat einen erheblichen Luftbedarf und damit Ventilationsverlust (ca. 1,0 bis 1,5%) und nimmt gierig Luft aus seiner Umgebung auf. Dabei kann auch vagabundierendes Spritzwasser mit eingezogen werden, wodurch sich naturgemäß die Verluste erhöhen.

Ein weiterer Luftbedarf resultiert durch die abgesetzte Form der Doppelbecher (5), die eine nicht gewollte Ventilation verursachen. Dabei wird in der Regel die Luft seitlich des Laufrades (6) angesaugt und radial nach außen zu den Doppelbechern (5) gefördert. Durch die aufgefächerte Form des Austrittswassers aus den Bechern wird diese stark mit Luft angereichert und als schaumige Mischung in den Abflusskanal abgeleitet. In der Verlängerung des Abflusskanales wird der größte Teil der Luft wieder ausgeschieden. Um die Luft wieder zu ergänzen, muss ein Luftkanal geschaffen werden, der zum einen mit atmosphärischem Druck (p-0) der Umgebung und dem Bereich des Laufrades mit Gehäuse verbunden ist.

Bei horizontaler Wellenanordnung ist eine gezielte Abfuhr des Austrittswassers mit nur 1-2 Düsenanordnung gut möglich, bei mehrdüsiger Anordnung wird dies sichtlich erschwert, da vermehrt das Austrittswasser von den Gehäusewänden auf das Laufrad zurückfällt und dadurch zu merklichen Leistungseinbußen führt. Es sind diverse Einbauten als Führungsmittel bekannt, die zur Ablenkung des Austrittswassers dienen. Diese sind nur bedingt wirksam, insbesondere bei größeren Fallhöhendifferenzen bzw. Zulaufdrücken (p-w).

Als Antwort auf diese Probleme wurde eine Lösung gefunden, die es mittels spezieller Gestaltung des Gehäuses und einem geschlossenen, umlaufend ausgebildeten, dachförmigen Verteilring (3) erlaubt, eine horizontale Peltonturbine bis zu sechsdüsiger Anordnung mit einer gezielten Wasserabfuhr zu betreiben. Dabei wird das Rückfallen bzw. Rückspritzen des Austrittswassers auf das Laufrad verhindert. Dies betrifft die internationale Patentanmeldung "Peltonturbine mit einem Wasserabfuhrsystem", basierend auf der deutschen Gebrauchsmusteranmeldung DE 20 2004 019 537.

Der Abstand von Mitte Laufrad bis zum Wasserspiegel des Ablaufkanals wird als Freihang (F) bezeichnet und als Fallhöhenverlust hingenommen, da dieser Bereich sich im atmosphärischen Druckausgleich befindet und damit keine Energierückgewinnung möglich ist. Ebenso als nachteilig hat sich bei ausführlichen Tests mit sechsdüsiger horizontaler Anordnung gezeigt, dass unter gewissen Umständen, insbesondere wenn durch die vorgeschalteten Düsenkrümmer der Freistrahl (4) durch Sekundärwirbel im Querschnitt Verformungen von einem idealen Strahl aufweist, und durch vagabundierendes Spritzwasser verbunden mit der Ventilations-Umluft, sich die Entleerung der Becher im Zusammenhang mit dem Gehäuse nachteilig auswirkt. Ein Leistungsabfall bei Volllast bei mehrdüsigem Betrieb kann die Folge sein.

Genau hier setzt die Erfindung ein, indem das Austrittswasser so geleitet und fokussiert wird, dass die Geschwindigkeit der Restenergie sowie die Fallhöhendifferenz des Freihanges (F) herangezogen wird, um einem gewissen Unterdruck (p-1) im Bereich des oberen Gehäuses (1) der Doppelbecher und dem Ablaufkanal mit dem atmosphärischen Druckbereich (p-0) herzustellen. Durch geeignete Formgebund der Gehäusewände (1a, 1a', 1b, 1b') mit anschließendem speziellen Saugstutzen (19) wird verhindert, dass Luft von dem Abflusskanal (30) mit der freien Oberfläche (31), in dem atmosphärischer Druck herrscht, sich mit dem Bereich vom Laufrad (5, 6) direkt austauschen kann. Eine geschlossene Formgebung vom Gehäuse bis zu den Saugstutzen ist hierfür die Bedingung.

Als logische Folge des bereits bestehenden Patentes "Peltonturbine mit einem Wasserabfuhrsystem" ergibt sich daraus bereits eine gute Führung des Austrittswassers aus den Bechern, die in der Folge in diese speziellen Saugstutzen (19) geleitet wird.

Die Belüftung der Doppelbecher (5) des Laufrades erfolgt jetzt weitgehend nach dem Austritt aus der Düse (2, 2a) und entlang des Freistrahles (4) durch den Verteilring (3) mit dem Durchbruch (3a), der die Luft durch Oberflächenreibung mitreißt und damit auch gezielt den Doppelbecher belüftet. Die Belüftung zu dem Bereich des Freistrahles kann über separate Bohrungen oder über einen Belüftungsraum (10) innerhalb des umlaufenden äußeren dachförmigen Führungsmittels erfolgen.

Zusätzlich wird die Luftzufuhr aus dem Laufrad-Seitenraum (11 und 12) unterbunden. Der benötigte Luftanteil ist jetzt nur noch ein Bruchteil dessen, als wenn das Laufrad offen im Gehäuse läuft und damit wird der Luftanteil im Austrittswasser stark reduziert. Konventionelle Turbinen benötigen einen Luftanteil von 35-70% des Wassers. Versuche haben gezeigt, dass mit Hilfe des geschilderten Vorgehens das milchig scheinende Abwasser in den Schächten, nach dem Unterbinden der konventionellen Laufradbelüftung, als fast klares Wasser erscheint.

Die eigentliche Formgebung der geschlossenen Saugstutzen (19) ist entsprechend dem Querschnitt (A-1) so ausgeführt, dass bei maximalem Wasserstrom das Austrittswasser ohne Rückstau und ohne große Umlenkung gut abgeführt werden kann. Vorzugsweise sind die Saugstutzen formschlüssig an der äußeren Gehäusewand (1a', 1b') des Gehäuses angefügt. Dabei wird ein Teil der Energie des Austrittswassers benützt, um Luft mitzureißen. Es entsteht dadurch im Turbinengehäuse ein gewisser Unterdruck, der zu einem hilft, den Becher besser zu entleeren und das Wasser entgegen dem Ventilationsluftstrom besser vom Laufrad weg fließen zu lassen und zum anderen einen Energieanteil entsprechend dem Sauggefälle auszunützen. Dabei kann es vor allem im Teillastbereich von Vorteil sein, dass die unteren Enden des Saugstutzens (19) tiefer als die Abflusskanal-Pegel (319 zu liegen kommen, um einen Lufteinzug zu verhindern.

Wesentlich für die Erfindung sind die Flächenverhältnisse innerhalb des Gehäuses, das bei dem Querschnitt (A-0) im Bereich der Achse (7) am größten ist, sich bis zu den Saugstutzen (A-1) verjüngt, wobei das Austrittswasser fokussiert und gleichzeitig beschleunigt wird, um so dann in den Saugstutzen (19) eingeleitet zu werden. Die wesentliche Beschleunigung des gesamten Austrittswassers in den Saugstutzen wird entsprechend dem physikalischen Gesetz von "Torricelli; Abflussgeschwindigkeit aus Gefäßen" bestimmt. Dabei muss der gesamte Weg vom Laufrad bis zum Ende des Ablaufstutzens, nach außen hin zum atmosphärischen Druckbereich, dicht ausgeführt sein.

Die Formgebung der Saugstutzen kann rund oder vieleckig sein. Von Wichtigkeit ist die Fläche am Eintritt (A-1) und am Austritt (A-2). Die Größe und Anzahl der Saugstutzen ist so zu bemessen, dass bei voller Leistung durch die Gesamtsumme der Flächen ein guter Ablauf ohne Rückstau gewährleistet wird. Bei genügender Länge der Ablaufstutzen (19) kann auch eine Flächenerweiterung (1d') von A-2 bezüglich A-1 von Vorteil sein. Um auch bei Teillast denselben Effekt des Unterdruckes zu erreichen, kann es sinnvoll sein, eine Zwischenwand (1e) einzusetzen.

Das gleiche Prinzip zur Erzeugung eines Unterdruckes im Laufradbereich kann auch bei vertikaler Turbinenwellenausführung angewendet werden.

Bekannterweise wird bei der vertikalen Anordnung das Austrittswasser aus der oberen Becherhälfte (5) knapp über dem Laufrad (6) radial-axial abgeführt. Dabei ist bei der Formgebung der Doppelbecher (5) im Zusammenhang mit dem Auftreffen des Freistrahles (3) darauf zu achten, dass durch die Relativbewegung zwischen den rotierenden Laufradbechern (5) und dem Austrittswasser die Becherrücken des folgenden Bechers nicht vom Austrittswasser beeinflusst werden. Ein Leistungsabfall, insbesondere bei sechsdüsigem Volllastbetrieb kann die Folge sein. Das Prinzip des Verteilringes entsprechend der Gebrauchsmusteranmeldung

DE 20 2004 019 537 ist hier besonders wirksam, vagabundierendes Spritzwasser vom Laufrad fernzuhalten.

Das Austrittswasser aus der unteren Becherhälfte (5) kann dagegen ungehinderter als das obere Austrittswasser den Becher verlassen, wobei die Schwerkraft des Wassers dem freien Austritt ohne Umlenkung entgegenkommt und somit eine entsprechende Restenergie beinhaltet.

Im Bereich des Ring-Querschnittes (A-1) treffen dann beide Teilwasserströme aus der oberen und unteren Becherhälfte zusammen. Der obere Teilwasserstrom hat durch die zweimalige Umlenkung schon viel der Restenergie verloren, bevor diese zusammen in den Saugstutzen eingeleitet werden. Der Saugstutzen weist hierbei zweckmäßigerweise eine vieleckige bzw. ringförmige Querschnittsfläche (19a) auf.

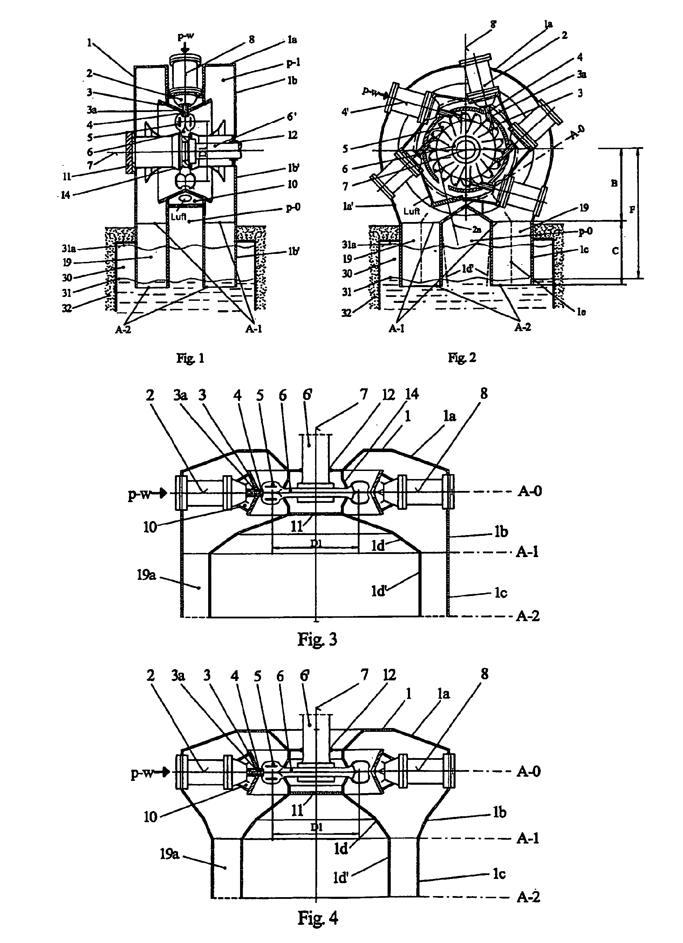

Besonders für eine Nachrüstung für konventionelle mehrdüsige vertikale Peltonturbinen kann die Anordnung entsprechend Fig. 3 verwendet werden.

Für eine Neukonstruktion bietet sich eine Anordnung entsprechend Fig. 4 an, die das Austrittswasser der unteren Becherhälfte ohne Umlenkung und damit mit viel Restenergie direkt in den Saugstutenring einleitet. Der Effekt zur Ausnutzung dieser Rest-Energie wird dabei besser genutzt.

Im Folgenden wird die Funktion der Erfindung anhand einer Prinzipskizze näher dargestellt und dabei die Funktion beschrieben.

### Es zeigen:

Die erfinderische Peltonturbine mit horizontaler Ausführung mit Saugstutzen:
- Fig. 1: Peltonturbine horizontal bis zu sechs Düsen, als Schnitt längs der Turbinenachse (7).
In der Darstellung ist das Prinzip der sechsdüsigen horizontalen Turbine entsprechend dem erteilten Patent Nr. EP 2 034 176 dargestellt, wobei das Gehäuse nach unten ab dem Querschnitt A-1 strömungsgünstig in so genannte Saugstutzen (19) formschlüssig übergeht. Diese Saugstutzen leiten das so geführte Austrittswasser in den Unterwasserkanal (30) ein. Vorteilhaft kann es sein, dass das Ende dieser Saugstutzen (A-2) in das Wasser des Abflusskanals eintaucht.
Ebenfalls ist ersichtlich, wie die Belüftung des Freistrahles zu dem Laufrad erfolgen kann. Luft aus der Umgebung mit atmosphärischem Druck (p-o) wird in den Aussparungen (Luft) angesaugt und über den Hohlraum (10) des Verteilringes (3) an den Düsenaustritt geführt und durch den Durchbruch (3a) mit dem Freistrahl auf den Doppelbecher (5) des Laufrades (6) aufgebracht. Durch die geschlossene Formgebung im Bereich des Verteilringes (3) bis zum Ende der Saugstutzen entsteht durch Restenergie und Höhendifferenz ein gewisser Unterdruck (p-1) im Bereich des Laufrades und dem oberen Teil des Gehäuses.
Die radiale Luftzufuhr ist gegenüber dem Stand der Technik durch zwei Abschlüsse (11, 12) gesperrt.
- Fig. 2: Entsprechend zu Fig. 1 die Ansicht quer zur Turbinenachse (7).
In der Darstellung ist eine Möglichkeit aufgezeigt, wie ein Übergang des speziellen Turbinengehäuses zu den Saugstutzen aussehen kann.

### Es zeigen:

Eine Peltonturbine in vertikaler Ausführung mit Saugstutzen: welche nicht Teil der Erfindung ist
- Fig. 3: Peltonturbine entsprechend dem Stand der Technik mit bis zu sechs Düsen, als Schnitt längs der Turbinenachse.
In der Darstellung ist ein Beispiel einer Nachrüstung durch Einbau eines Verteilringes (3) aufgezeigt.
Spezielle Gehäuseinnenwände (1d, 1d') sind als Ringräume ausgebildet. Die Querschnitte der Ringräume werden entsprechend dem maximalen Wasserstrom der Turbine ausgelegt. Vorteilhaft tauchen die Ringräume im Querschnitt A-2 in den Unterwasserkanal an der Oberfläche (31) ein.
- Fig. 4: Entsprechend zu Fig. 3 zeigt die Darstellung eine Möglichkeit, wie ein Übergang des speziellen Turbinengehäuses zu den Saugstutzen aussehen kann, wenn die Formgebung entsprechend dem Hauptstrom des Austrittswassers optimiert wird.

### Bezugszeichenliste

- 1: Gehäuse
- 1a: Gehäusewand
- 1a': Gehäusewand
- 1b: Gehäusewand
- 1b': Gehäusewand
- 1c: Gehäusewand
- 1d: Gehäusewand
- 1d': Gehäusewand
- 1e: Gehäusewand
- 2: Düse
- 2a: weitere Düsen
- 3: Verteilring
- 3a: Durchbruch
- 4: Freistrahl
- 4': Achse, Düse und Freistrahl
- 5: Becher, Doppelbecher
- 6: Laufrad
- 6': Laufradwelle
- 7: Drehachse
- 8: Symmetrieachse zur Drehachse, Laufradebene
- 8': Symmetrieachse quer zur Drehachse
- 10: Hohlraum
- 11: Luftabschluss
- 12: Luftabschluss
- 14: Innerer Führungsring
- 19: Saugstutzen
- 19: Saugstutzen ringförmig
- 30: Unterwasserkanal
- 31: Unterwasserkanal-Oberfläche, minimaler Pegel
- 31a: Unterwasserkanal-Oberfläche, maximaler Pegel
- 32: Unterwasserkanal-Wände

- p-0: Atmosphärischer Druck
- p-1: Unterdruck-Gebiet
- p-w: Druckwasser Zulauf
- air: Durchbruch für Lufteinzug

- A-0: Bezugsfläche
- A-1: Bezugsfläche
- A-2: Bezugsfläche

- B: Bericht Austrittswasser Fokussierung
- C: Bereich Saugstutzen
- F: Freihang
- D1: Strahlkreisdurchmesser des Laufrades

## Patentansprüche

1. Peltonturbine mit einer horizontal angeordneten Laufradwelle (7) und mit einem umlaufend ausgebildeten äußeren Verteilring (3), der sich aus der Laufradebene (8) seitlich und in radialer Richtung öffnet, um das Austritts- und Spritzwasser aus den Laufradbechern (5) abzuleiten, wobei mehrere Düsen (2) von außerhalb des Gehäuses durch den Verteilring (3), insbesondere durch Bohrungen (3a) in dem Verteilring (3) jeweils einen Freistrahl (4) auf das Laufrad (5, 6) spritzen,
**dadurch gekennzeichnet,**
**dass** sich das Gehäuse (1, 1a) nach unten zu einem engsten Querschnitt (A-1) verjüngt, an den zumindest ein Saugstutzen (19) ansetzt, welcher in den Unterwasserkanal (30) einmündet, und dass der Saugstutzen (19) aus mehreren einzelnen zum Gehäuse hin abgeschlossenen einzelnen Hohlkörpern besteht, die so in den Querschnitten (A-1, A-2) bemessen sind, dass die Luft aus dem oberen Gehäuseteil (1) mitgerissen wird und dabei keine Eigenbelüftung des Laufrades (5, 6) über die Saugstutzen (19) erfolgen kann, und dass die mit dem Austritts- und Spritzwasser mitgerissene Luft ersetzt wird durch Luft, welche von außen durch Öffnungen Luft in den Hohlraum (10) des Verteilringes (3) einfließt und über Bohrungen (3a) mit dem Freistrahl (4) zusammen zum Laufrad (5, 6) gelangt, und
**dass** das Austritts- und Spritzwasser aus den Bechern (5), geführt durch den Verteilring (3) und den inneren Führungsring (14), in einer geschlossenen Kammer von den Bechern bis zum Unterwasser geführt wird, damit im Gehäuse (1) ein Unterdruck entsteht.

2. Peltonturbine nach Anspruch 1,
**dadurch gekennzeichnet,**
**dass** der engste Querschnitt (A-1) nur einen Anteil des Gehäusequerschnitts auf Achshöhe (A-0) beträgt und auf eine mittlere Fallgeschwindigkeit von 2 bis 5 m/s beim größten Wasserdurchsatz der Turbine ausgelegt ist.

3. Peltonturbine nach einem der Ansprüche 1 bis 2,
**dadurch gekennzeichnet,**
**dass** der Saugstutzen (19) bis unterhalb der Wasserlinie (31, 31 a) eines Unterwasserkanals (30) eintaucht.

4. Peltonturbine nach einem der Ansprüche 1 bis 3,
**dadurch gekennzeichnet,**
**dass** der Verteilring (3) mit einem Hohlraum (10) ausgeführt ist, um Außenluft an die Öffnungen Luft zu führen.

5. Peltonturbine nach einem der Ansprüche 1 bis 4,
**dadurch gekennzeichnet,**
**dass** die Düsenkörper (2, 2') gegen die Außenseite des Verteilrings (3) abgedichtet sind.

6. Peltonturbine nach einem der Ansprüche 4 bis 5,
**dadurch gekennzeichnet,**
**dass** der Hohlraum (10) des Verteilrings (3) mit einem Durchbruch Luft zu einem Raum mit atmosphärischem Luftdruck verbunden ist.

7. Peltonturbine nach einem der Ansprüche 4 bis 6,
**dadurch gekennzeichnet,**
**dass** der Hohlraum (10) des Verteilrings (3) mit einem Durchbruch Luft zu dem Unterwasserkanal (30) verbunden ist, um die ausgeschiedene Luft zu dem Verteilring (3) einzuspeisen.

8. Peltonturbine nach einem der Ansprüche 1 bis 7,
**dadurch gekennzeichnet,**
**dass** die Luft zum Hohlraum (10) des Verteilrings (3) dosiert werden kann, um den Unterdruck im Gehäuse zu regulieren.

9. Peltonturbine nach einem der Ansprüche 1 bis 8,
**dadurch gekennzeichnet,**
**dass** sich der Saugstutzen (19) zwischen dem Querschnitt (A-1) und dem Ende des Saugstutzens mit der Annäherung an den Unterwasserkanal vergrößert.

10. Peltonturbine nach den vorherigen Ansprüchen,
**dadurch gekennzeichnet,**
**dass** das Zulaufsystem zu den einzelnen Düsen eine konventionelle Pelton-Verteilleitung ist.

11. Peltonturbine nach dem Anspruch 10,
**dadurch gekennzeichnet,**
**dass** der Saugstutzen aus einer runden bzw. vieleckigen Querschnitts-Ringfläche (19a) besteht.

## Claims

1. A Pelton turbine having a horizontally arranged impeller shaft (7) and having an outer distribution ring (3) which is configured as circumferential and which opens laterally and in a radial direction from the impeller plane (8) to drain the discharge water and splash water from the impeller buckets (5), wherein a plurality of nozzles (2) each spray an open jet (4) onto the impeller (5, 6) from the outside of the housing through the distribution ring (3), in particular through bores (3a) in the distribution ring (3),
**characterized in that**
the housing (1, 1a) tapers downwardly to a narrowest cross-section (A-1) at which at least one suction stub (19) engages which opens into the underwater passage (30); and
**in that** the suction stub (19) comprises a plurality of individual hollow bodies which are closed toward the housing and which are dimensioned in the cross-sections (A-1, A-2) such that the air is entrained from the upper housing part (1) and no self-ventilation of the impeller (5, 6) can take place via the suction stubs (19) in this respect; and
**in that** the air entrained with the discharge water and splash water is replaced with air which flows into the hollow space (10) from outside through openings (air) and moves via bores (3a) together with the open jet (4) to the impeller (5, 6); and
**in that** the discharge water and splash water, guided by the distribution ring (3) and by the inner guide ring (14), are guided in a closed chamber from the buckets up to the underwater so that a vacuum arises in the housing (1).

2. A Pelton turbine in accordance with claim 1,
**characterized in that**
the narrowest cross-section (A-1) only amounts to a portion of the housing cross-section at axis height (A-0) and is designed for a mean fall velocity of 2 to 5 m/s at the largest water throughput of the turbine.

3. A Pelton turbine in accordance with one of the claims 1 to 2,
**characterized in that**
the suction stub (19) dips to beneath the water line (31, 31a) of an underwater passage (30).

4. A Pelton turbine in accordance with any one of the claims 1 to 3,
**characterized in that**
the distribution ring (3) is designed with a hollow space (10) to guide outside air to the openings (air).

5. A Pelton turbine in accordance with any one of the claims 1 to 4,
**characterized in that**
the nozzle bodies (2, 2') are sealed toward the outer side of the distribution ring (3).

6. A Pelton turbine in accordance with any one of the claims 4 to 5,
**characterized in that**
the hollow space (10) of the distribution ring (3) is connected by an aperture (air) to a space having atmospheric air pressure.

7. A Pelton turbine in accordance with any one of the claims 4 to 6,
**characterized in that**
the hollow space (10) of the distribution ring (3) is connected by an aperture (air) to the underwater passage (30) to feed the expelled air to the distribution ring (3).

8. A Pelton turbine in accordance with any one of the claims 1 to 7,
**characterized in that**
the air can be metered to the hollow space (10) of the distribution ring (3) to regulate the vacuum in the housing.

9. A Pelton turbine in accordance with any one of the claims 1 to 8,
**characterized in that**
the suction stub (19) increases in size between the cross-section (A-1) and the end of the suction stub approaching the underwater passage.

10. A Pelton turbine in accordance with the preceding claims,
**characterized in that**
the inflow system to the individual nozzles is a conventional Pelton distribution line.

11. A Pelton turbine in accordance with claim 10,
**characterized in that**
the suction stub comprises a round or polygonal annular cross-sectional surface (19a).

## Revendications

1. Turbine de Pelton avec un arbre de rotor agencé horizontalement (7) et avec un anneau de répartition extérieur (3) réalisé à la circonférence, qui s'ouvre depuis le plan du rotor (8) latéralement et en direction radiale afin de dériver l'eau sortante et l'eau projetée provenant des godets du rotor (5), dans laquelle plusieurs buses (2) projettent respectivement un jet libre (4) vers le rotor (5, 6) depuis l'extérieur du boîtier à travers l'anneau de répartition (3), en particulier à travers des perçages (3a) dans l'anneau de répartition (3),
**caractérisée en ce que**
le boîtier (1, 1a) va en se rétrécissant vers le bas jusqu'à une section transversale (A-1) la plus étroite, au niveau de laquelle commence au moins une pipe d'aspiration (19) qui débouche dans le canal immergé (30), et **en ce que** la pipe d'aspiration (19) se compose de plusieurs corps creux individuels refermés individuellement vers le boîtier, dont les sections transversales (A-1, A-2) sont ainsi dimensionnées que l'air provenant de la partie supérieure du boîtier (1) est entraîné et qu'il ne peut ici se produire aucune mise à l'air propre du rotor (5, 6) via les pipes d'aspiration (19), et **en ce que** l'air entraîné avec l'eau sortante et l'eau projetée est remplacé par de l'air qui entre depuis l'extérieur à travers des ouvertures jusque dans la cavité creuse (10) de l'anneau de répartition (3) et parvient au rotor (5, 6) conjointement avec le jet libre (4) via des perçages (3a), et
**en ce que** l'eau sortante et l'eau projetée provenant des godets (5) est menée dans une chambre fermée depuis des godets jusqu'à la partie immergée, en étant guidé par l'anneau de répartition (3) et par l'anneau de guidage intérieur (14), afin qu'il se produise une dépression dans le boîtier (1).

2. Turbine de Pelton selon la revendication 1,
**caractérisée en ce que** la section transversale la plus étroite (A-1) s'élève uniquement à une fraction de la section transversale du boîtier à la hauteur de l'axe (A-0) et est conçue pour une vitesse de chute moyenne de 2 à 5 m/s pour le plus grand débit d'eau de la turbine.

3. Turbine de Pelton selon l'une des revendications 1 et 2,
**caractérisée en ce que** la pipe d'aspiration (19) plonge jusqu'au-dessous du niveau d'eau (31, 31a) d'un canal immergé (30).

4. Turbine de Pelton selon l'une des revendications 1 à 3,
**caractérisée en ce que** l'anneau de répartition (3) est réalisé avec une cavité creuse (10) afin de mener l'air extérieur vers les ouvertures.

5. Turbine de Pelton selon l'une des revendications 1 à 4,
**caractérisée en ce que** les corps de buses (2, 2') sont étanchés contre le côté extérieur de l'anneau de répartition (3).

6. Turbine de Pelton selon l'une des revendications 4 à 5,
**caractérisée en ce que** la cavité creuse (10) de l'anneau de répartition (3) est reliée au moyen de traversées à une chambre à pression d'air atmosphérique.

7. Turbine de Pelton selon l'une des revendications 4 à 6,
**caractérisée en ce que** la cavité creuse (10) de l'anneau de répartition (3) est reliée au canal immergé (30) au moyen d'une traversée, afin d'alimenter l'air séparé vers l'anneau de répartition (3).

8. Turbine de Pelton selon l'une des revendications 1 à 7,
**caractérisée en ce que** l'air peut être dosé vers la cavité creuse (10) de l'anneau de répartition (3), afin de réguler la dépression dans le boîtier.

9. Turbine de Pelton selon l'une des revendications 1 à 8,
**caractérisée en ce que** la pipe d'aspiration (19) va en s'agrandissant entre la section transversale (A-1) et l'extrémité de la pipe d'aspiration au fur et à mesure que l'on se rapproche du canal immergé.

10. Turbine de Pelton selon les revendications précédentes, **caractérisée en ce que** le système d'admission vers les buses individuelles est une conduite de répartition de Pelton classique.

11. Turbine de Pelton selon la revendication 10,
**caractérisée en ce que** la pipe d'aspiration est constituée d'une surface annulaire (19a) à section transversale ronde ou polygonale.
